# EUROPEAN PATENT APPLICATION

(11) **EP 3 616 497 A1**
(43) Date of publication of application: **04.03.2020**
(21) Application number: 19731578.1
(22) Date of filing: 12.02.2019
(51) Int. Cl.: A01D 46/26

(54) **FRUIT HARVESTER**

(30) Priority: 02.07.2018 CN 201810707108
(71) Applicant: Zhejiang Zhongli Tools Manufacture Co., Ltd., Lishui, Zhejiang 321404 (CN)
(72) Inventor: XU, Jianfeng, Huzhen Town, Jinyun County Lishui, Zhejiang 321404 (CN); CHEN, Yufang, Huzhen Town, Jinyun County Lishui, Zhejiang 321404 (CN); XIANG, Zhiyao, Huzhen Town, Jinyun County Lishui, Zhejiang 321404 (CN); WANG, Lijian, Huzhen Town, Jinyun County Lishui, Zhejiang 321404 (CN); HU, Lulin, Huzhen Town, Jinyun County Lishui, Zhejiang 321404 (CN)
(74) Representative: Elzaburu S.L.P.
(86) International application number: PCT/CN2019/074841
(87) International publication number: WO 2020/007050

(57) **Abstract**

The present invention relates to the field of agricultural machinery, and in particular, to a fruit harvester. The fruit harvester includes a casing, a rear end of the casing being provided with a hand rod, a front end of the casing being provided with two swinging claws arranged side by side, the swinging claw including a swinging head and a plurality of swinging rods disposed on the swinging head. A motor, a speed reduction component and two driving rods in one-to-one correspondence with the swinging heads are disposed in the casing. The speed reduction component includes a bevel gear, a lower gear, a transmission gear and an upper gear. The bevel gear is disposed on a motor shaft. The bevel gear meshes with the lower gear. The transmission gear is fixed on the lower gear. The upper gear meshes with the transmission gear. The upper gear is provided with an eccentric shaft. One end of the driving rod is rotatably disposed on the eccentric shaft. The driving rod extends out of the casing. An end of the driving rod, away from the eccentric shaft, is hinged to an end portion of the swinging head. A middle portion of the swinging head is rotatably disposed at the front end of the casing through a rotating shaft. The present invention is smooth in use, unlikely to get stuck and sufficient in pick strength.

## Description

### Technical Field

The present invention relates to the field of agricultural machinery, and in particular, to a fruit harvester.

### Background Art

Traditional dry fruits are generally harvested by hand, which is less efficient and labor intensive. In order to solve this problem, some harvesting machines have been designed to harvest dry fruits, such as China Authorized Patent Publication No. CN204335361 U, filed on May 20, 2015, and entitled "Connection Structure of Fruit Harvester". Disclosed is a connection structure for picking a dry fruit. The action of a connecting rod is driven by the expansion and contraction of a transmission shaft to make left and right collectors opened and closed to pick the fruit. However, when this structure is actually applied, a connection part between the left and right collectors is often easily caught in branches, leaves and the like, resulting in the entire fruit harvester being stagnant or stuck. Moreover, the left collector and the right collector are insufficient in pick strength, resulting in low harvest efficiency.

### Summary of the Invention

The present invention is directed to a fruit harvester that is smooth in use, unlikely to get stuck and sufficient in pick strength, in order to overcome the defects in the prior art that a connection part between left and right collectors is often easily caught in branches, leaves and the like to result in the entire fruit harvester being stagnant or stuck and the harvest efficiency is low due to insufficient pick strength of the left collector and the right collector.

In order to achieve the above object, the present invention adopts the following technical solutions:
A fruit harvester includes:
a casing, a rear end of the casing being provided with a hand rod, a front end of the casing being provided with two swinging claws arranged side by side, the swinging claw including a swinging head and a plurality of swinging rods disposed on the swinging head.

A motor, a speed reduction component and two driving rods in one-to-one correspondence with the swinging heads are disposed in the casing. The speed reduction component includes a bevel gear, a lower gear, a transmission gear and an upper gear. The bevel gear is disposed on a motor shaft. The bevel gear meshes with the lower gear. The transmission gear is fixed on the lower gear. The upper gear meshes with the transmission gear.

The upper gear is provided with an eccentric shaft extending downwards. A swinging spacing is provided between the eccentric shaft and an axis of the upper gear. One end of the driving rod is rotatably disposed on the eccentric shaft. The driving rod extends out of the casing. An end of the driving rod, away from the eccentric shaft, is hinged to an end portion of the swinging head. A middle portion of the swinging head is rotatably disposed at the front end of the casing through a rotating shaft. The rotation of the motor shaft is transmitted to the transmission of the eccentric shaft by a two-stage speed reduction mechanism. One end of the driving rod rotates with the eccentric shaft, and the other end of the driving rod drives the end portion of the swinging head to move. Because the middle portion of the swinging head is hinged to the casing, the entire swinging claw swings back and forth in a fan shape, thereby picking down a fruit. Since the two swinging claws are respectively driven by the corresponding driving rods, the two swinging claws are relatively independent outside the casing, and the entire fruit harvester cannot be stuck due to being not caught in branches and the like. Moreover, the two-stage speed reduction component cooperates with the eccentric shaft, so that the swinging claws have a great pick strength.

Preferably, a side of the swinging head, close to the swinging rods, is provided with a plurality of rod sleeves in one-to-one correspondence with the swinging rods. The swinging rods are fixed on the corresponding rod sleeves. In two adjacent rod sleeves, one rod sleeve is oriented diagonally upwards, and the other rod sleeve is oriented diagonally downwards. The staggered swinging rods pick fruits within a larger range, and the fruits on the same branch can be picked twice at a time, thus making it easier to pick down the fruits.

Preferably, one end of the swinging rod is provided with an external thread, the rod sleeve is internally provided with an internal thread, and the swinging rod is in threaded connection with the rod sleeve. The swinging rod is thus fixed to the rod sleeve more firmly, and the swinging rod may be replaced separately if damaged.

Preferably, the hand rod is a telescopic rod. The hand rod is telescopic for convenience of harvesting fruits of different heights.

Preferably, the telescopic rod includes a first telescopic rod and a second telescopic rod slidably disposed in the first telescopic rod. The second telescopic rod is connected to the casing. The second telescopic rod is provided with a groove. The first telescopic rod is provided with a protrusion matching the groove. The protrusion is located in the groove. The rotation of the telescopic rod is limited to ensure the stability of swinging of the swinging claws.

Preferably, the casing is provided with a U-shaped mounting body. The U-shaped mounting body forms a mounting cavity therein. The speed reduction component is located in the mounting cavity. The U-shaped mounting body includes an upper mounting plate, a lower mounting plate and a side mounting plate. The side mounting plate is provided with a retaining hole through which the motor shaft passes. The motor shaft passes through the retaining hole. The upper gear is rotatably disposed on the upper mounting plate. Upper and lower ends of the transmission gear are both rotatably disposed on the upper mounting plate and the lower mounting plate, respectively. The lower gear is close to the lower mounting plate. The speed reduction components are all mounted in the U-shaped mounting body to achieve a compact structure.

Preferably, the driving rod is composed of a rear connecting rod, a transition rod and a front connecting rod, sequentially connected to one another. The two rear connecting rods are arranged up and down on the eccentric shaft. The two front connecting rods are located at the same height. The space of the eccentric shaft is fully utilized, and it is ensured that the two swinging heads connected to the front connecting rods are located at the same height, which is beneficial to improve the structural stability.

Preferably, the casing is composed of an upper casing and a lower casing connected to each other, and an end portion of the casing is provided with two waist-shaped hole groups in one-to-one correspondence with the swinging heads. The waist-shaped hole group includes an upper waist-shaped hole provided on the upper casing and a lower waist-shaped hole provided on the lower casing. The middle portion of the swinging head is provided with a rotating shaft fixing hole. In one waist-shaped hole group, the rotating shaft sequentially passes through the upper waist-shaped hole, the rotating shaft fixing hole and the lower waist-shaped hole, and upper and lower ends of the rotating shaft are both rotatably disposed in the upper waist-shaped hole and the lower waist-shaped hole, respectively. When the swinging claws swing back and forth, the waist-shaped holes increase the swinging amplitude of the swinging claws. The swinging claws can not only swing in the left-right direction, but also swing in the front-rear direction with a certain swinging amplitude, thus making it easier to pick down the fruits.

The present invention has the following beneficial effects: (1) the two swinging claws are in an independent state outside the casing, and cannot be caught in branches and the like, thereby preventing the fruit harvester from being stuck, and achieving smooth use; (2) the staggered swinging rods pick fruits within a larger range, and the fruits on the same branch can be picked twice at a time, thus making it easier to pick down the fruits; and (3) the two-stage speed reduction component cooperates with the eccentric shaft, so that the swinging claws have a great pick strength, and the waist-shaped holes also increase the swinging amplitude of the swinging claws and improve the fruit harvesting efficiency.

### Brief Description of the Drawings

Fig. 1 schematically shows a structural view of Embodiment 1 of the present invention;
Fig. 2 is an enlarged view of Part A in Fig. 1;
Fig. 3 schematically shows a structural view of a speed reduction component in Embodiment 1 of the present invention;
Fig. 4 schematically shows an internal structural view of a speed reduction component in Embodiment 1 of the present invention;
Fig. 5 schematically shows a structural view of a casing in Embodiment 2 of the present invention; and
Fig. 6 schematically shows a structural view of a swinging head in Embodiment 2 of the present invention.

In the drawings: 1, casing; 11, motor; 12, speed reduction component; 121, bevel gear; 122, lower gear; 123, transmission gear; 124, upper gear; 13, driving rod; 131, rear connecting rod; 132, transition rod; 133, front connecting rod; 14, U-shaped mounting body; 141, upper mounting plate; 142, lower mounting plate; 143, side mounting plate; 144, retaining hole; 15, eccentric shaft; 16, upper casing; 17, lower casing; 18, upper waist-shaped hole; 19, lower waist-shaped hole; 2, hand rod; 21, first telescopic rod; 22, second telescopic rod; 221, groove; 3, swinging claw; 31, swinging head; 311, rotating shaft fixing hole; 32, swinging rod; and 33, rod sleeve.

### Detailed Description of the Invention

The present invention will be further described below in conjunction with the accompanying drawings and specific embodiments.

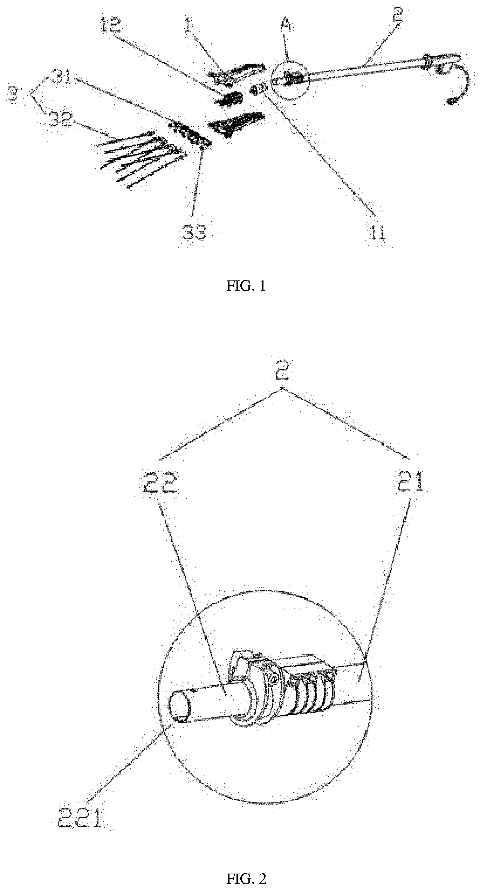

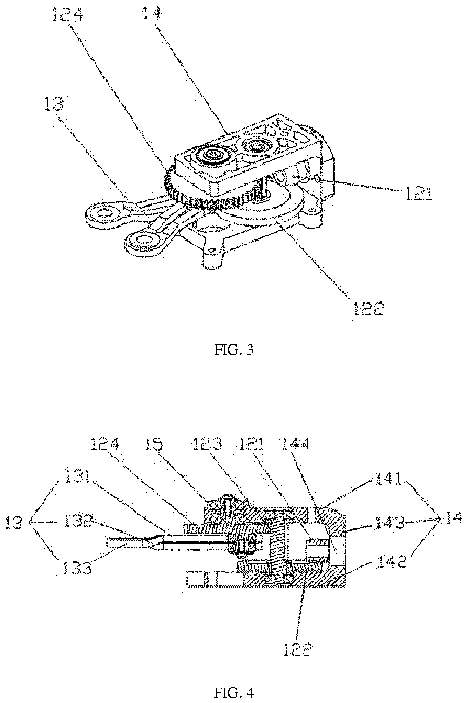

Embodiment 1: As shown in Fig. 1 to Fig. 4, a fruit harvester includes:
a casing 1, a rear end of the casing being provided with a hand rod 2, a front end of the casing being provided with two swinging claws 3 arranged side by side, the swinging claw including a swinging head 31 and a plurality of swinging rods 32 disposed on the swinging head. The hand rod is a telescopic rod for convenience of harvesting fruits of different heights. The telescopic rod includes a first telescopic rod 21 and a second telescopic rod 22 slidably disposed in the first telescopic rod. The second telescopic rod is connected to the casing. The second telescopic rod is provided with a groove 221. The first telescopic rod is provided with a protrusion matching the groove. The protrusion is located in the groove. The protrusion cooperates with the groove to limit the rotation of the telescopic rod, thereby ensuring the stability of swinging of the swinging claws. A side of the swinging head, close to the swinging rods, is provided with a plurality of rod sleeves 33 in one-to-one correspondence with the swinging rods. The swinging rods are fixed on the corresponding rod sleeves. In two adjacent rod sleeves, one rod sleeve is oriented diagonally upwards, and the other rod sleeve is oriented diagonally downwards. The staggered swinging rods pick fruits within a larger range, and the fruits on the same branch can be picked twice at a time, thus making it easier to pick down the fruits. One end of the swinging rod is provided with an external thread, the rod sleeve is internally provided with an internal thread, and the swinging rod is in threaded connection with the rod sleeve, so that the swinging rod is fixed to the rod sleeve more firmly, and the swinging rod may be replaced separately if damaged.

A motor 11, a speed reduction component 12 and two driving rods 13 in one-to-one correspondence with the swinging heads are disposed in the casing. The speed reduction component includes a bevel gear 121, a lower gear 122, a transmission gear 123 and an upper gear 124. The bevel gear is disposed on a motor shaft. The bevel gear meshes with the lower gear. The transmission gear is fixed on the lower gear. The upper gear meshes with the transmission gear. The casing is provided with a U-shaped mounting body 14. The U-shaped mounting body forms a mounting cavity therein. The speed reduction component is located in the mounting cavity. The U-shaped mounting body includes an upper mounting plate 141, a lower mounting plate 142 and a side mounting plate 143. The side mounting plate is provided with a retaining hole 144 through which the motor shaft passes. The motor shaft passes through the retaining hole. The upper gear is rotatably disposed on the upper mounting plate. Upper and lower ends of the transmission gear are both rotatably disposed on the upper mounting plate and the lower mounting plate, respectively. The lower gear is close to the lower mounting plate. The lower gear is mounted on the transmission gear through a spline. The speed reduction components are all mounted in the U-shaped mounting body to achieve a compact structure and higher stability.

The upper gear is provided with an eccentric shaft 15 extending downwards. A swinging spacing is provided between the eccentric shaft and an axis of the upper gear. One end of the driving rod is rotatably disposed on the eccentric shaft. The driving rod extends out of the casing. An end of the driving rod, away from the eccentric shaft, is hinged to an end portion of the swinging head. A middle portion of the swinging head is rotatably disposed at the front end of the casing through a rotating shaft. The driving rod is composed of a rear connecting rod 131, a transition rod 132 and a front connecting rod 133, sequentially connected to one another. The two rear connecting rods are arranged up and down on the eccentric shaft. The two front connecting rods are located at the same height. The space of the eccentric shaft is fully utilized, and it is ensured that the two swinging heads connected to the front connecting rods are located at the same height, which is beneficial to improvement of the structural stability.

In the implementation of the fruit harvester, after the motor is started, the bevel gear drives the lower gear to rotate, and the transmission gear rotates with the lower gear to drive the upper gear to rotate. One end of the driving rod rotates with the eccentric shaft, and the other end of the driving rod enables the inner end portion of the swinging head to move. Since the middle portion of the swinging head is hinged to the casing, the swinging head swings back and forth in a fan shape for the staggered swinging rods to pick down fruits, and staff can hold the hand rod to harvest the fruits.

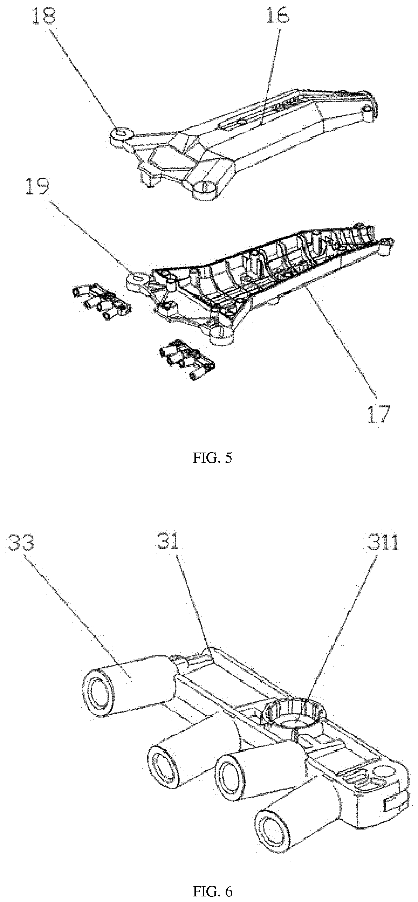

Embodiment 2: Embodiment 2 has a similar basic structure and implementation manner as Embodiment 1, except that, as shown in Fig. 5 to Fig. 6, the casing is composed of an upper casing 16 and a lower casing 17 connected to each other, and an end portion of the casing is provided with two waist-shaped hole groups in one-to-one correspondence with the swinging heads. The waist-shaped hole group includes an upper waist-shaped hole 18 provided on the upper casing and a lower waist-shaped hole 19 provided on the lower casing. The middle portion of the swinging head is provided with a rotating shaft fixing hole 311. In one waist-shaped hole group, the rotating shaft sequentially passes through the upper waist-shaped hole, the rotating shaft fixing hole and the lower waist-shaped hole, and upper and lower ends of the rotating shaft are both rotatably disposed in the upper waist-shaped hole and the lower waist-shaped hole, respectively. The rotating shaft is not only rotatable in the waist-shaped hole group, but also slidable in the waist-shaped hole group as the swinging claw swings. When the swinging claws swing back and forth, the waist-shaped holes increase the swinging amplitude of the swinging claws. The swinging claws can not only swing in the left-right direction, but also swing in the front-rear direction with a certain swinging amplitude, thus making it easier to pick down the fruits.

The present invention has the following beneficial effects: the two swinging claws are in an independent state outside the casing, and cannot be caught in branches and the like, thereby preventing the fruit harvester from being stuck, and achieving smooth use; the staggered swinging rods pick fruits within a larger range, and the fruits on the same branch can be picked twice at a time, thus making it easier to pick down the fruits; and the two-stage speed reduction component cooperates with the eccentric shaft, so that the swinging claws have a great pick strength, and the waist-shaped holes also increase the swinging amplitude of the swinging claws and improve the fruit harvesting efficiency.

## Claims

1. A fruit harvester, comprising:
a casing, a rear end of the casing being provided with a hand rod, a front end of the casing being provided with two swinging claws arranged side by side, the swinging claw including a swinging head and a plurality of swinging rods disposed on the swinging head, wherein
a motor, a speed reduction component and two driving rods in one-to-one correspondence with the swinging heads are disposed in the casing, the speed reduction component comprises a bevel gear, a lower gear, a transmission gear and an upper gear, the bevel gear is disposed on a motor shaft, the bevel gear meshes with the lower gear, the transmission gear is fixed on the lower gear, and the upper gear meshes with the transmission gear;
the upper gear is provided with an eccentric shaft extending downwards, a swinging spacing is provided between the eccentric shaft and an axis of the upper gear, one end of the driving rod is rotatably disposed on the eccentric shaft, the driving rod extends out of the casing, an end of the driving rod, away from the eccentric shaft, is hinged to an end portion of the swinging head, and a middle portion of the swinging head is rotatably disposed at the front end of the casing through a rotating shaft.

2. The fruit harvester according to claim 1, wherein a side of the swinging head, close to the swinging rods, is provided with a plurality of rod sleeves in one-to-one correspondence with the swinging rods, and the swinging rods are fixed on the corresponding rod sleeves; and in two adjacent rod sleeves, one rod sleeve is oriented diagonally upwards, and the other rod sleeve is oriented diagonally downwards.

3. The fruit harvester according to claim 2, wherein one end of the swinging rod is provided with an external thread, the rod sleeve is internally provided with an internal thread, and the swinging rod is in threaded connection with the rod sleeve.

4. The fruit harvester according to claim 1 or 2, wherein the hand rod is a telescopic rod.

5. The fruit harvester according to claim 4, wherein the telescopic rod comprises a first telescopic rod and a second telescopic rod slidably disposed in the first telescopic rod, the second telescopic rod is connected to the casing, the second telescopic rod is provided with a groove, the first telescopic rod is provided with a protrusion matching the groove, and the protrusion is located in the groove.

6. The fruit harvester according to claim 1 or 2, wherein the casing is provided with a U-shaped mounting body, the U-shaped mounting body forms a mounting cavity therein, the speed reduction component is located in the mounting cavity, the U-shaped mounting body comprises an upper mounting plate, a lower mounting plate and a side mounting plate, the side mounting plate is provided with a retaining hole through which the motor shaft passes, the motor shaft passes through the retaining hole, the upper gear is rotatably disposed on the upper mounting plate, upper and lower ends of the transmission gear are both rotatably disposed on the upper mounting plate and the lower mounting plate, respectively, and the lower gear is close to the lower mounting plate.

7. The fruit harvester according to claim 1 or 2, wherein the driving rod is composed of a rear connecting rod, a transition rod and a front connecting rod, sequentially connected to one another, the two rear connecting rods are arranged up and down on the eccentric shaft, and the two front connecting rods are located at the same height.

8. The fruit harvester according to claim 1 or 2, wherein the casing is composed of an upper casing and a lower casing connected to each other, an end portion of the casing is provided with two waist-shaped hole groups in one-to-one correspondence with the swinging heads, the waist-shaped hole group comprises an upper waist-shaped hole provided on the upper casing and a lower waist-shaped hole provided on the lower casing, the middle portion of the swinging head is provided with a rotating shaft fixing hole, in one waist-shaped hole group, the rotating shaft sequentially passes through the upper waist-shaped hole, the rotating shaft fixing hole and the lower waist-shaped hole, and upper and lower ends of the rotating shaft are both rotatably disposed in the upper waist-shaped hole and the lower waist-shaped hole, respectively.
